# EUROPÄISCHE PATENTANMELDUNG

(11) **EP 1 020 313 A2**
(43) Veröffentlichungstag der Anmeldung: **19.07.2000**
(21) Anmeldenummer: 00100326.8
(22) Anmeldetag: 07.01.2000
(51) Int. Cl.: B60J 7/12

(54) **Fahrzeug-Verdeck**

(30) Priorität: 13.01.1999 DE 19900909
(71) Anmelder: Bayerische Motoren Werke Aktiengesellschaft, 80809 München (DE)
(72) Erfinder: Dangl, Wolfgang, 85375 Neufahrn (DE); Siring, Harald, 81377 München (DE); Striegl, Theodor, 84140 Gangkofen (DE); Maerkl, Markus, 84130 Dingolfing (DE); Bloechl, Armin, 94089 Neureichenau (DE); Kasparak, Manfred, 94089 Neureichenau (DE)

(57) **Zusammenfassung**

Das beschriebene Fahrzeug-Verdeck umfaßt eine Mittelbahn (1), die mit zwei Seitenbahnen (2) durch eine doppelte Naht (5) verbunden ist. Mit der Mittelbahn (1) ist auch eine starre Heckscheibe (3) fest verbunden.

Um beim Absenken des gesamten Verdecks in einen Verdeck-Kasten eine übermäßige Stoffbeanspruchung in den seitlichen, unteren Bereichen des Verdeck-Bezuges, die an die starre Heckscheibe angrenzen, zu verhindern, ist in diesen Bereichen die doppelte Naht (5) unterbrochen bzw. offen. In diesem Bereich weist die Mittelbahn (1) eine von ihrem Rand (6) zur Verdeck-Mitte gerichtete Stecklasche (7) auf, die in eine zugeordnete, zur Verdeck-Seite hin offene Tasche (8) jeder Seitenbahn (2) verschieblich eingreift.

## Beschreibung

Die Erfindung bezieht sich auf ein Fahrzeug-Verdeck mit den Merkmalen des Oberbegriffes von Patentanspruch 1.

Ein bekanntes derartiges Verdeck (DE 41 28 115 C1) weist eine die starre Heckscheibe aufnehmende Mittelbahn auf, die mit den beiden Seitenbahnen durch durchgehende Nähte verbunden ist. Um die Stoffbelastung in den seitlich an die Heckscheibe angrenzenden Verdeck-Bereichen dann zu vermindern, wenn das Verdeck einschließlich der Heckscheibe in einen Verdeck-Kasten absenkbar sein soll, sind in diesen Bereichen Stoff-Falten der Mittelbahn mit verlängerten Stoffabschnitten der Seitenbahnen so vernäht, daß trotzdem eine durchgehende Naht geschaffen ist.

Eine entsprechende Verdeckbezug-Ausbildung ist für eine analoge Beanspruchungsart auch schon in der US 2,893,782 beschrieben.

In beiden Fällen wird zwar eine Relativbewegung der Stoffbereiche möglich, doch ist die Beanspruchung des Verdeck-Bezuges immer noch sehr hoch.

Der Erfindung liegt die Aufgabe zugrunde, eine weitere Möglichkeit zur Vermeidung der hohen Stoffbeanspruchung in den kritischen Bereichen des Verdecks anzugeben.

Diese Aufgabe wird erfindungsgemäß durch die im Patentanspruch 1 angegebenen Merkmale gelöst.

Weitere vorteilhafte Einzelheiten der Erfindung sind Gegenstand der Unteransprüche.

Das Unterbrechen der die Mittelbahn mit den beiden Seitenbahnen jeweils verbindenden Naht, die auch als Kappnaht bezeichnet wird, über einen bestimmten Abschnitt ihrer Länge, ermöglicht eine ungehinderte Relativbewegung der beiden Stoffbahnen in diesem Bereich. Der Verdeck-Bezug wird an diesen Stellen daher deutlich weniger beansprucht. Die am Rand der Mittelbahn vorgesehene, zur Fahrzeugmitte hin gerichtete Stecklasche ermöglicht in Verbindung mit der zur Verdeck-Seite hin offene Tasche jeder Seitenbahn trotz des Fehlens einer durchgehenden Verbindungsnaht eine hohe Dichtheit des Verdecks gegen Wasser, insbesondere auch Spritzwasser. Das Wasser müßte mehrfach um 180° umgelenkt werden, was in Verbindung mit dem engen Anliegen der Stecklasche in der Tasche praktisch nicht zu befürchten ist. Wegen des verschieblichen Eingriffs der Stecklasche in die Tasche sind in dem zugeordneten Bereich zwischen Mittelbahn und Seitenbahn die beim Absenken des Verdecks in einen Verdeck-Kasten insbesondere bei Verwendung einer starren Heckscheibe auftretenden Relativverschiebungen zwischen der Mittelbahn und den Seitenbahnen in hohem Maß ungehindert möglich, so daß die Stoffbeanspruchung des Verdeck-Bezuges niedrig ist.

Darüber hinaus begünstigt das Fehlen einer durchgehenden Naht zwischen Mittelbahn und Seitenbahnen einen besseren Druckausgleich beim Schließen der Fahrzeugtüren, wenn deren Fenster angehoben sind.

Die Erfindung und weitere vorteilhafte Einzelheiten der Erfindung, die Gegenstand von Unteransprüchen sind, sind im folgenden anhand eines in der Zeichnung dargestellten Ausführungsbeispiels näher erläutert. Es zeigt
- Fig. 1: eine Draufsicht auf ein geschlossenes Verdeck im linken hinteren Eckbereich und
- Fig. 2: einen Schnitt nach der Linie II-II in Fig. 1.

Das in der Zeichnung dargestellte Cabrio-Verdeck weist einen Verdeck-Bezug auf, der eine Mittelbahn 1 und zwei Seitenbahnen 2, von denen lediglich die linke Seitenbahn 2 dargestellt ist. Mit der Mittelbahn 1 fest verbunden ist eine starre Heckscheibe 3. Die Verbindung erfolgt durch Verkleben unter Verwendung eines zusätzlichen Befestigungsstreifens 4.

Jede Seitenbahn 2 ist gegenüber dem Rand 6 der Mittelbahn 1 in einem Abschnitt a der Länge dieses Randes 6 offen. Die Mittelbahn 1 weist an diesem Abschnitt a eine von ihrem Rand 6 zur Verdeckmitte gerichtete Stecklasche 7 auf, die in eine zugeordnete, zur Verdeckseite hin offene Tasche 8 jeder Seitenbahn 2 verschieblich eingreift.

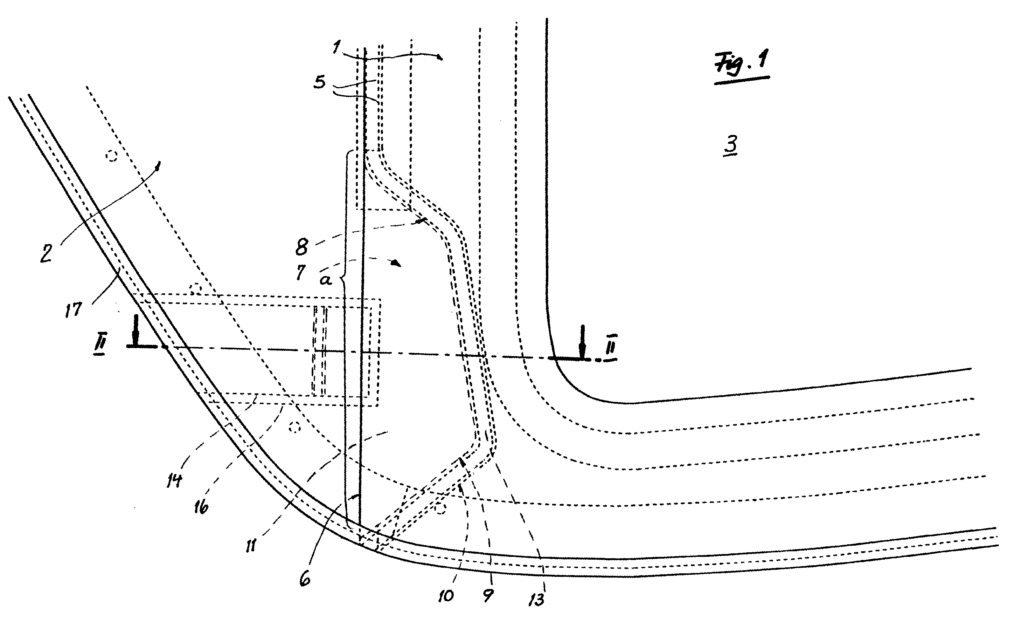

Gemäß Fig. 1 ist zur Bildung des offenen Abschnitts a des Randes 6 die doppelte Naht 5 in den beiden an die unteren, hinteren Ecken der Heckscheibe 3 seitlich angrenzenden Bereichen des Verdeck-Bezuges unterbrochen.

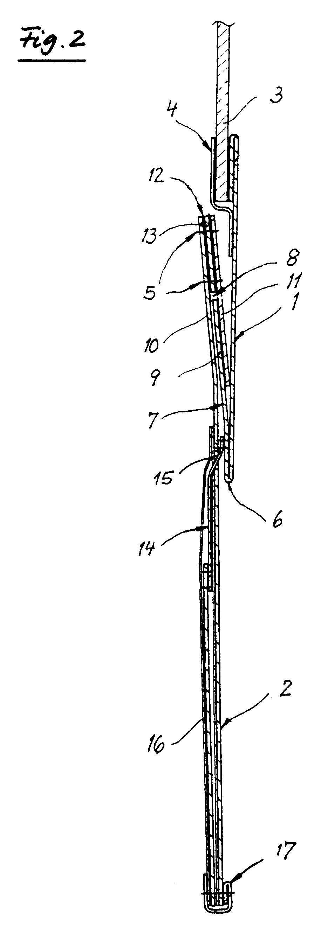

Die Stecklasche 7 kann, wie in Fig. 2 ersichtlich, durch einen um etwa 180° gefalteten Stoffabschnitt 9 der Mittelbahn 1 gebildet sein.

Die Tasche 8 jeder Seitenbahn 2 ist bei dem dargestellten Ausführungsbeispiel durch Vernähen einer unterhalb des Randes der Mittelbahn zur Fahrzeugmitte hin gerichteten Verlängerung 10 einer Seitenbahn 2 mit einem separaten Stoffzuschnitt 11 gebildet. Entlang des Nahtrandes 12 der Tasche 8 ist zweckmäßig zwischen Seitenbahn 2 und dem Stoffzuschnitt 11 ein Abstandsstreifen 13 eingenäht. Auf diese Weise ist auch unmittelbar angrenzend an den Nahtbereich zwischen der Verlängerung der Seitenbahn 2 und dem erwähnten Stoffzuschnitt 11 ein gewisser Mindestabstand gewährleistet, der ein ungehindertes Verschieben der Stecklasche 7 in der Tasche auch dann noch gewährleistet, wenn die Stecklasche 7 völlig in die Tasche 8 eingeschoben ist.

Die Mittelbahn 1 ist innen im Bereich der Stecklasche 7 mit einem Ende eines zugelastischen Bandes 14, zweckmäßig eines Gummibandes verbunden, das etwa zum Rand 6 der Mittelbahn 1 verläuft. Unterhalb des Randes 6 ist das elastische Band 14 gemäß Fig. 2 durch einen Schlitz 15 der Seitenbahn 2 geführt und mit seinem anderen Ende am äußeren Randbereich der Seitenbahn 2 festgelegt. Weiterhin ist das elastische Band 14 auf der Innenseite der Seitenbahn 2 durch einen an seinen Rändern ringsum mit der Seitenbahn 2 fest verbundenen Stoff-Streifen 16 abgedeckt. Das elastische Band 14 bewirkt bei einem geschlossenen Verdeck ein gutes Anliegen der Mittelbahn 1 auf der Seitenbahn 2 im Bereich von Stecklasche 7 und Tasche 8, in welchem die außerhalb dieses Bereiches über die Naht 5 fest verbundenen beiden Bahnen nicht fest miteinander vernäht sind.

Die freien Ränder der Mittelbahn 1 und der Seitenbahn 2 sind mit einem Einfaßband 17 vernäht, das auch das äußere Ende des elastischen Bandes 14 und des dieses Band abdeckenden Stoff-Streifens 16 am Rand der Seitenbahn 2 festlegt.

## Patentansprüche

1. Fahrzeug-Verdeck, mit einem Verdeckbezug, der eine Mittelbahn (1) und zwei damit durch Nähte (5) verbundene Seitenbahnen (2) aufweist, wobei mit der Mittelbahn (1) eine starre Heckscheibe (3) fest verbunden ist und ferner die Mittelbahn (1) in seitlich an die Heckscheibe (3) angrenzenden Verdeckbereichen gegenüber den Seitenbereichen (2) begrenzt verlagerbar ist,
dadurch gekennzeichnet, daß jede Seitenbahn (2) gegenüber dem Rand (6) der Mittelbahn (1) in einem Abschnitt (a) der Länge dieses Randes (6) offen ist und die Mittelbahn (1) an diesem Abschnitt (a) eine von ihrem Rand (6) zur Verdeck-Mitte gerichtete Stecklasche (7) aufweist, die in eine zugeordnete, zur Verdeck-Seite hin offene Tasche (8) jeder Seitenbahn (2) verschieblich eingreift.

2. Verdeck nach Anspruch 1,
dadurch gekennzeichnet, daß die Naht (5) in den beiden an die unteren Ecken der Heckscheibe (3) seitlich angrenzenden Bereichen des Verdeckbezuges unterbrochen ist.

3. Verdeck nach Anspruch 1,
dadurch gekennzeichnet, daß die Stecklasche (7) durch einen um etwa 180° nach innen gefalteten Stoffabschnitt (9) der Mittelbahn (1) gebildet ist.

4. Verdeck nach Anspruch 1,
dadurch gekennzeichnet, daß die Tasche (8) jeder Seitenbahn (2) durch Vernähen einer unterhalb des Randes (6) der Mittelbahn (1) zur Fahrzeugmine hin gerichteten Verlängerung (10) der Seitenbahn (2) mit einem separaten Stoffzuschnitt (11) gebildet ist.

5. Verdeck nach Anspruch 4,
dadurch gekennzeichnet, daß entlang des Nahtrandes (12) der Tasche (8) zwischen Seitenbahn (2) und dem Stoffzuschnitt (11) ein Abstandsstreifen (13) eingenäht ist.

6. Verdeck nach Anspruch 1,
dadurch gekennzeichnet, daß die Mittelbahn (1) innen im Bereich der Stecktasche (7) mit einem Ende eines zugelastischen Bandes (14), zweckmäßig eines Gummibandes verbunden ist, das etwa zum Rand (6) der Mittelbahn (1) verläuft, unterhalb des Randes (6) durch einen Schlitz (15) der Seitenbahn (2) geführt und mit seinem anderen Ende am äußeren Randbereich der Seitenbahn (2) festgelegt ist.

7. Verdeck nach Anspruch 6,
dadurch gekennzeichnet, daß das Band (14) auf der Innenseite der Seitenbahn (2) durch einen an seinen Rändern ringsum mit der Seitenbahn (2) fest verbundenen Stoffstreifen (16) abgedeckt ist.
